# EUROPEAN PATENT APPLICATION

(11) **EP 4 512 542 A1**
(43) Date of publication of application: **26.02.2025**
(21) Application number: 23202265.7
(22) Date of filing: 06.10.2023
(51) Int. Cl.: B09B 3/30, B29B 17/02

(54) **REMOVING DEVICE FOR REMOVING A JUNCTION BOX FROM A SOLAR CELL MODULE**

(30) Priority: 23.08.2023 TW 112131711
(71) Applicant: National University of Tainan, Tainan City, 70005 (TW)
(72) Inventor: FU, Yao-Hsien, 83073 Kaohsiun (TW); HUNG, Chia-Tsung, 70848 TAINAN (TW)
(74) Representative: Germain Maureau

(57) **Abstract**

A removing device (200) for removing a junction box (802) from a solar cell module (800) includes a carriage mechanism (4) and a removing mechanism (5) mounted on a frame mechanism (3). The removing mechanism (5) includes a seat regulating module (52), an aligning and holding seat module (53) and a removing seat (54) which is moved by the seat regulating module (52) toward a back plate of a solar panel unit (801), and a removing driving module (56) which drives movement of the removing seat (54) toward the junction box (802) along the back plate of the solar panel unit (801) so as to move a cutting edge (543) of the removing sear (54) into a juncture between the junction box and the back plate and remove the junction box (802). An automatic removing process is performed, and damage to the solar panel unit (801) is prevented.

## Description

The disclosure relates to a solar cell module processing device, and more particularly to a removing device for removing a junction box from a solar cell module.

In recent years, solar cell modules have become very popular as green energy devices, which convert sunlight into electricity to be stored for use in applications. After a period of use the photoelectric conversion efficiency of the solar cell module degrades to a certain extent, and a recycling process where the non functional solar cell module is discarded is required.

Also, a plurality of junction boxes are attached to a back plate of a solar panel unit by adhesives. During a recycling process for a back plate and a glass cover of the solar cell module, it is required to manually remove the junction boxes using a hand tool to pry the junction boxes from the back plate, which is inconvenient and labor-intensive, and might damage to the glass cover.

Therefore, an object of the disclosure is to provide a removing device that can alleviate at least one of the drawbacks of the prior art.

According to an aspect of the disclosure, there is provided a removing device according to claim 1.

With the seat regulating module, the aligning and holding seat module, the removing seat and the removing driving module of the removing mechanism, an automatic removing process for removing the junction box of the solar cell module can be performed, and damage to the solar panel unit can be avoided during the process so as to prevent damage to the glass cover of the solar panel unit.

Other features and advantages of the disclosure will become apparent in the following detailed description of the embodiment with reference to the accompanying drawings. It is noted that various features may not be drawn to scale.
FIG. 1 is a fragmentary perspective view illustrating an embodiment of a removing device according to the disclosure.
FIG. 2 is a schematic sectional top view illustrating a state when the embodiment carries a solar cell module.
FIG. 3 is a schematic sectional top view illustrating a state when the embodiment retains the solar cell module.
FIG. 4 is a fragmentary perspective view illustrating a removing mechanism of the embodiment.
FIG. 5 is a fragmentary sectional side view illustrating the removing mechanism.
FIG. 6 is a partly-sectional perspective view illustrating a removing seat of the removing mechanism.
FIG. 7 is a perspective view illustrating a temporary storage mechanism of the embodiment.
FIG. 8 is a schematic view illustrating a process for discharging a junction box from the temporary storage mechanism.
FIG. 9 is a schematic view illustrating a process for removing a junction box with the removing mechanism.
FIG. 10 is a fragmentary perspective view illustrating a state when the removing mechanism is moved above the temporary storage mechanism.
FIG. 11 is a schematic view illustrating a process for moving the removing seat to a returned position to thrust the junction box outwardly thereof.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

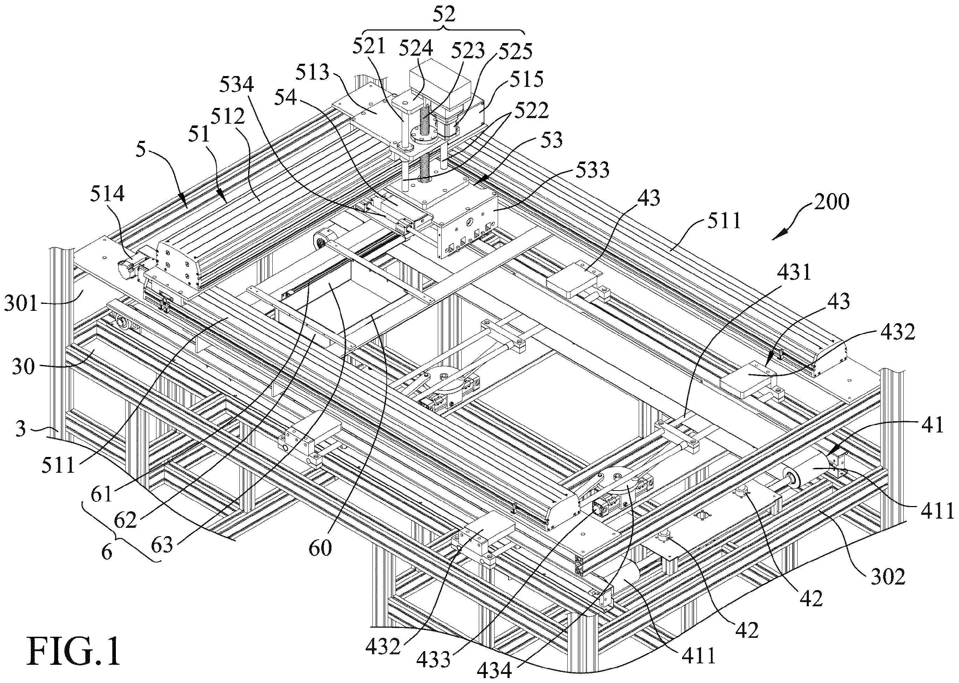

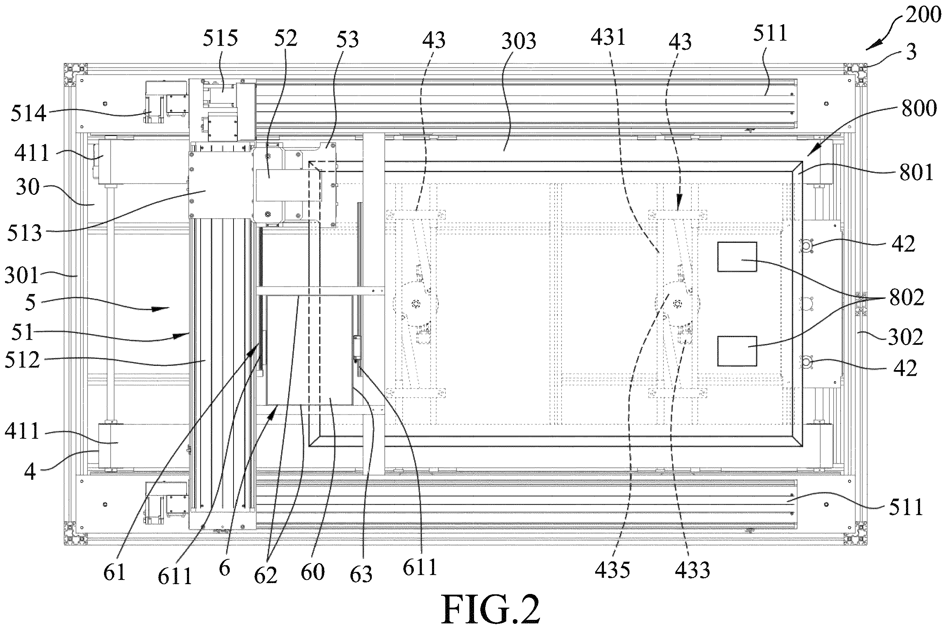

Referring to FIGS. 1, 2 and 3, an embodiment of a removing device 200 for a solar cell module 800 is adapted to be in signal connection with a control device (not shown) so as to be controlled and operated to perform an automatic removing process for removing the junction box 802 of the solar cell module 800. The solar cell module 800 includes a solar panel unit 801 and at least one junction box 802 which is attached to a back plate of the solar panel unit 801. The removing device 200 includes a frame mechanism 3, a carriage mechanism 4, a removing mechanism 5 and a temporary storage mechanism 6 which are mounted on the frame mechanism 3.

The frame mechanism 3 defines a removing space 30 therein for the carriage mechanism 4, the removing mechanism 5 and the temporary storage mechanism 6 to be mounted. The removing space 30 has an inlet port 301 and an outlet port 302 which are opposite to each other in a front-rear direction for feeding the solar cell module 800 to be processed from the inlet port 301 and transporting the processed solar cell module 800 outwardly of the outlet port 302. In this embodiment, the frame mechanism 3 includes a plurality of shafts and/or wall plates (not shown). Since the structure of the frame mechanism 3 may be of various known types, a detailed description thereof is omitted.

The carriage mechanism 4 includes a carriage and transport module 41 which is mounted on the frame mechanism 3 for carrying and transporting rearwardly the solar cell module 800 to an operating space 303 in the frame mechanism 3, a plurality of rear stop modules 42 which are mounted on the frame mechanism 4 and rearwardly of the carriage and transport module 41, and two laterally aligning modules 43 which are mounted on the frame mechanism 4 below the carriage and transport module 41 and which are spaced apart from each other in the front-rear direction.

The carriage and transport module 41 is disposed to carry the solar cell module 800 to be processed from the inlet port 301, to transport the solar cell module 800 into the operating space 303, and to convey the processed solar cell module 800 outwardly of the frame mechanism 3 through the outlet port 302.

In this embodiment, the carriage and transport module 41 includes two conveying units 411 which are spaced apart from each other in a left-right direction to cooperatively convey the solar cell module 800. Alternatively, the carriage and transport module 41 may be in the form of rollers extending in the left-right direction and arranged in the front-rear direction.

Each rear stop module 42 is driven to be moved in an up-down direction relative to the carriage and transport module 41 between an upper stopping position, where the rear stop module 42 projects upwardly of the carriage and transport module 41 to stop the rearward movement of the solar cell module 800, and a lower retreating position, where the rear stop module 42 retreats below the carriage and transport module 41 to permit the rearward movement of the solar cell module 800 through the outlet port 302.

In this embodiment, each rear stop module 42 is in the form of a telescopic cylinder extendable and retractable in the length direction to be shifted between the upper stopping position and the lower retreating position. The rear stop module 42 may be implemented in a variety of forms. For example, each rear stop module 42 may be formed to be swingable in the up-down direction.

Each laterally aligning module 43 includes a guide rail unit 431 which extends in the left-right direction and which is mounted on the frame mechanism 3, two laterally aligning members 432 which are slidably mounted on the guide rail unit 431 and which are spaced apart from each other in the left-right direction, a synchronizing transmitting unit 434 which is coupled with the laterally aligning members 432 to synchronize movement of the laterally aligning members 432, and a laterally aligning driver 433 which is coupled with the synchronizing transmitting unit 434. The synchronizing transmitting unit 434 includes a circular rotary seat 435 which is rotatably mounted on the frame mechanism 3 and which is coupled with the driver 433 to be rotatable about a vertical axis, and two linkages 436, each of which interconnects the rotary seat 435 and a respective one of the laterally aligning members 432 and which are disposed diametrically opposite to each other.

The laterally aligning driver 433 is in the form of a motor which is coupled with the rotary seat 435 so as to drive rotation of the rotary seat 435, which makes the laterally aligning members 432 move synchronously along the guide rail unit 431 in opposite directions.

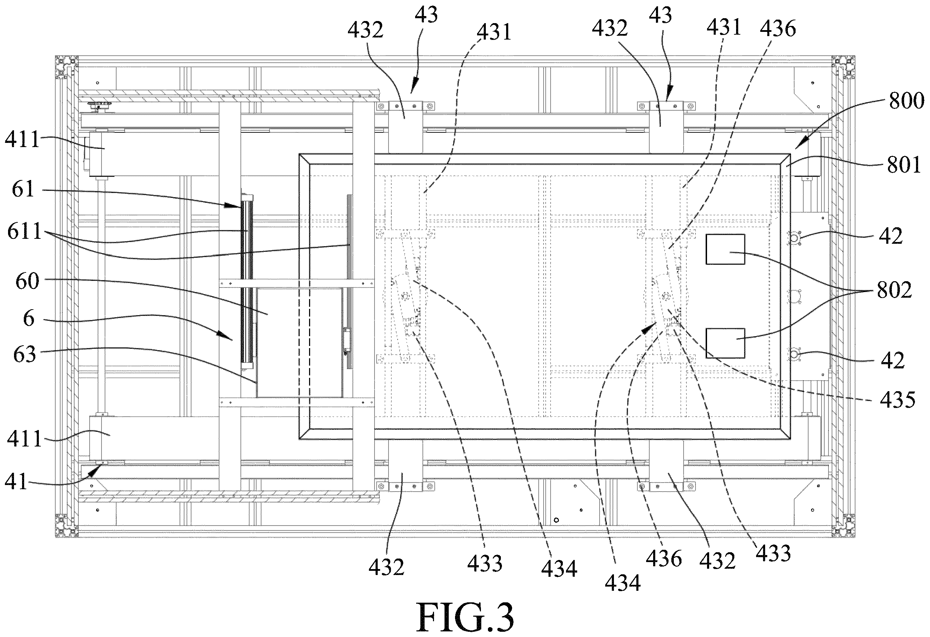

Specifically, through the laterally aligning members 432 of each laterally aligning module 43 driven to move close to each other in the left-right direction, left and right sides of the solar cell module 800 carried on the carriage and transport module 41 are thereby pressed to regulate orientation of the solar cell module 800 and be retained in a predetermined aligned position, as shown in FIG. 3.

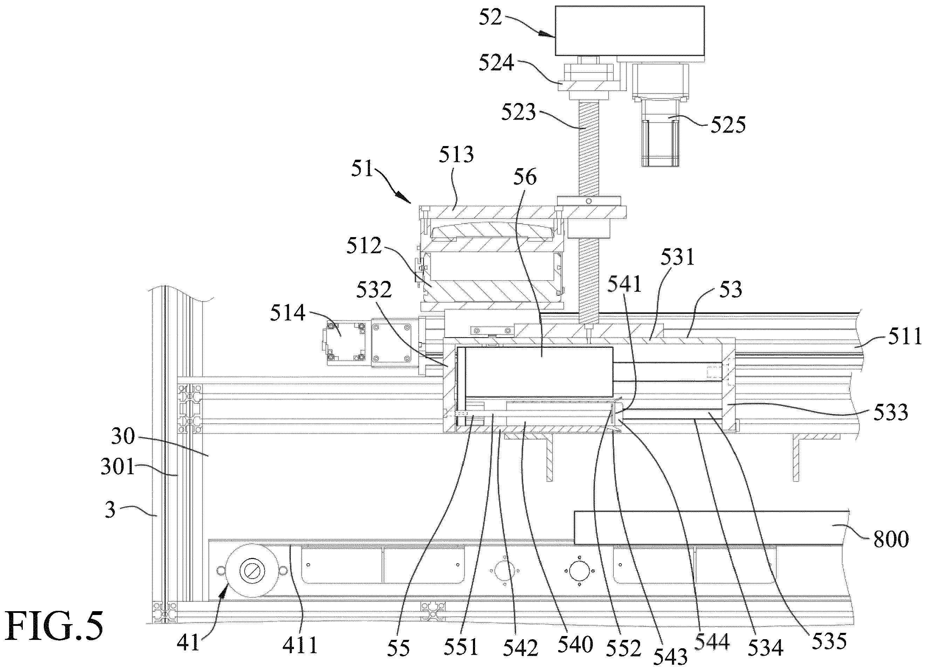

With reference to FIGS. 1, 4 and 5, the removing mechanism 5 includes a two-axis movement regulating module 51 which is mounted on the frame mechanism 3 above the carriage and transport module 41, a seat regulating module 52 which is mounted on and driven by the two-axis movement regulating module 51, an aligning and holding seat module 53 which is mounted on the seat regulating module 52 to be moved thereby, a removing seat 54 and a thrust member 55 which are mounted on and moved with the aligning and holding seat module 53, and a removing driving module 56 which is mounted on the aligning and holding seat module 53 and which is coupled with the removing seat 54.

The two-axis movement regulating module 51 is disposed to drive the horizontal movement of the seat regulating module 52 in two axial directions (i.e., in the front-rear direction and the left-right direction). The two-axis movement regulating module 51 includes two first regulating units 511 which extend in the front-rear direction and which are spaced apart from each other in the left-right direction, a second regulating unit 512 which extends in the left-right direction and which interconnects the two first regulating units 511, a slider 513 which is slidably mounted on the second regulating unit 512 and on which the seat regulating module 52 is mounted, two first drivers 514 which are respectively mounted on the first regulating units 511 and coupled with the second regulating unit 512, and a second driver 515 which is mounted on the second regulating unit 512 and which is coupled with the slider 513. The first drivers 514 are controlled to cooperatively transmit the second regulating unit 512 to move along the first regulating units 511. The second driver 515 is controlled to transmit the slider 513 to move along the second regulating unit 512.

Specifically, each of the first regulating units 511 and the second regulating unit 512 is in the form of a linear rail and driven through a respective one of the first drivers 514 and the second driver 515. Since a variety of linear motion structures may be formed as the first and second regulating units 511, 512, such as threaded shafts, pneumatic cylinders or other slide rails, and of a known type, a detailed description thereof is omitted.

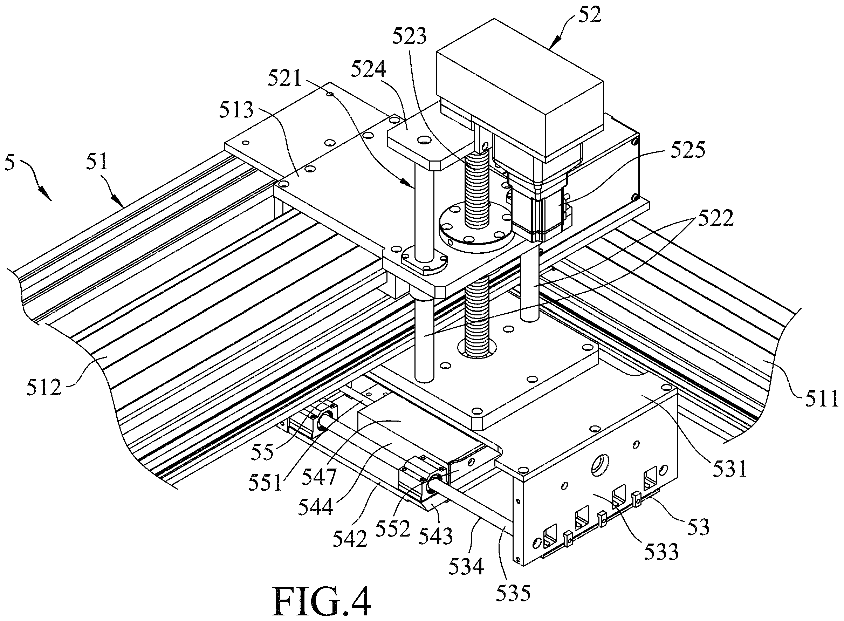

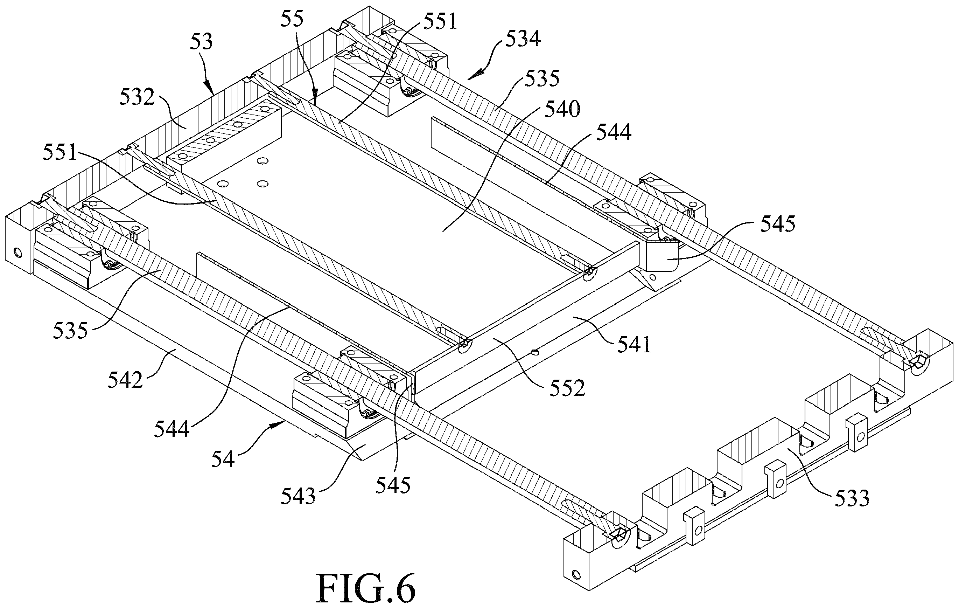

With reference to FIGS. 4, 5 and 6, the seat regulating module 52 includes a guiding shaft unit 521 which extends in the up-down direction through the slider 513 and which has a bottom end connected with the aligning and holding seat module 53, a threaded shaft 523 which extends in the up-down direction, which is threadedly engaged with the slider 513 and which has a bottom end rotatably connected with the aligning and holding seat module 53, a mounting seat 524 which interconnects upper ends of the guiding shaft unit 521 and the threaded shaft 523, and an up-down movement driver 525 which is mounted on the mounting seat 524 and which is coupled with the threaded shaft 523.

The guiding shaft unit 521 has two guiding shafts 522 which extend in the up-down direction through the slider 513, which are spaced apart from each other and which are connected between the mounting seat 524 and the aligning and holding seat module 53. The up-down movement driver 525 is controlled to drive the rotation of the threaded shaft 523 relative to the slider 513 so as to move the guiding shaft unit 521, the mounting seat 524 and the up-down movement driver 525 in the up-down direction relative to the slider 513, thereby moving the aligning and holding seat module 53 in the up-down direction relative to the slider 513.

In other embodiments, the seat regulating module 52 may be of another type, and the guiding shaft unit 521 may only have one guiding shaft 522.

The aligning and holding seat module 53 includes a horizontal top plate 531 which interconnects the bottom ends of the guiding shafts 522 and the threaded shaft 523, a side plate 532 and an abutting plate 533 which extend respectively and downwardly from front and rear sides of the top plate 531, and a horizontal movement guideway unit 534 which extends in the front-rear direction and which interconnects the side plate 532 and the abutting plate 533. The horizontal movement guideway unit 534 has two guiding rails 535 which extend in the front-rear direction between the side plate 532 and the abutting plate 533 and which are spaced apart from each other in the left-right direction.

The removing seat 54 includes a cutting blade 542 which is slidably mounted on the guiding rails 535 and which is spacedly disposed below the top plate 531, two constraint plates 544 which are uprightly disposed on an upper side of the cutting blade 542, which extend in the front-rear direction and which are spaced apart from each other in the left-right direction, and an upper plate 547 which straddles the two constraint plates 544 and which is spaced apart from the cutting blade 542 such that the upper plate 547, the constraint plates 544 and the cutting blade 542 cooperatively define a receiving space 540 thereamong. The receiving space 540 has an opening 541 facing rearwardly. The constraint plates 544 respectively have guiding end portions 545 which are deflected away from each other proximate to the opening 541.

In this embodiment, the cutting blade 542 has a cutting edge 543 which extends in the left-right direction and which projects from the opening 541 of the receiving space 540. The cutting edge 543 is of a single-edge structure and faces upwardly. Other types of the cutting edge 543 may be alternatively provided.

The thrust member 55 is securely mounted on the side plate 532, and has two extending shaft portions 551 which extend rearwardly toward the abutting plate 533 to extend into the receiving space 540, and a thrust portion 552 in the form of an upright plate which interconnects rear ends of the extending shaft portions 551 and which is disposed adjacent to the opening 541 of the receiving space 540. Thus, when the removing seat 54 is driven to move rearwardly relative to the aligning and holding seat module 53, the thrust portion 552 is moved forwardly relative to the removing seat 54 so as to expose the opening 541 of the receiving space 540.

The removing driving module 56 is coupled with the removing seat 54 and is mounted between the removing seat 54 and the abutting plate 533 to drive the movement of the removing seat 54 in the front-rear direction between a returned position and a cutting position. In this embodiment, the removing driving module 56 is in the form of a telescopic cylinder in the front-rear direction, such as a pneumatic or hydraulic cylinder, which has front and rear ends connected with the cutting blade 542 and the abutting plate 533.

With reference to FIGS. 1, 7 and 8, the temporary storage mechanism 6 includes a rail transmitting module 61 which is mounted on the frame mechanism 3 and which extends horizontally and in a transverse direction (i.e., the left-right direction) transverse to the horizontal movement guideway unit 534, two upright wall plates 62 which are mounted on the frame mechanism 3 and which are spaced apart from each other along the rail transmitting module 61, and a movable bottom plate 63 which is movably mounted on the slide rail module 61 and which is connectable with the two wall plates 62. In this embodiment, the rail transmitting module 61 includes two slide rail units 611, one of which is a linear rail provided with a motor component therein. The movable bottom plate 63 has a U-shaped cross-section and is movably mounted on the slide rail units 611.

Through actuation of the rail transmitting module 61, the movable bottom plate is transmitted by and moved along the rail transmitting module 61 relative to the wall plates 62 between a carrying position, where the movable bottom plate 63 interconnects the wall plates 62 to cooperatively define a storage space 60 with an upper opening for receiving the junction box 802 from the receiving space 540, and a discharging position, where the movable bottom plate 63 is disengaged from at least one of the wall plates 62 to form a discharging port 601 of the storage space 60 so as to permit a downward discharge of the junction box 802.

With reference to FIGS. 1, 2 and 3, in operation, the carriage and transport module 41 is actuated to feed a solar cell module 800 rearwardly in the operating space 303, and the rear stop modules 42 are actuated to the upper stopping position such that the solar cell module 800 abuts thereagainst. Then, the laterally aligning members 432 are driven by the laterally aligning drivers 433 to move in the left-right direction to press left and right sides of the solar cell module 800 so as to retain the solar cell module 800.

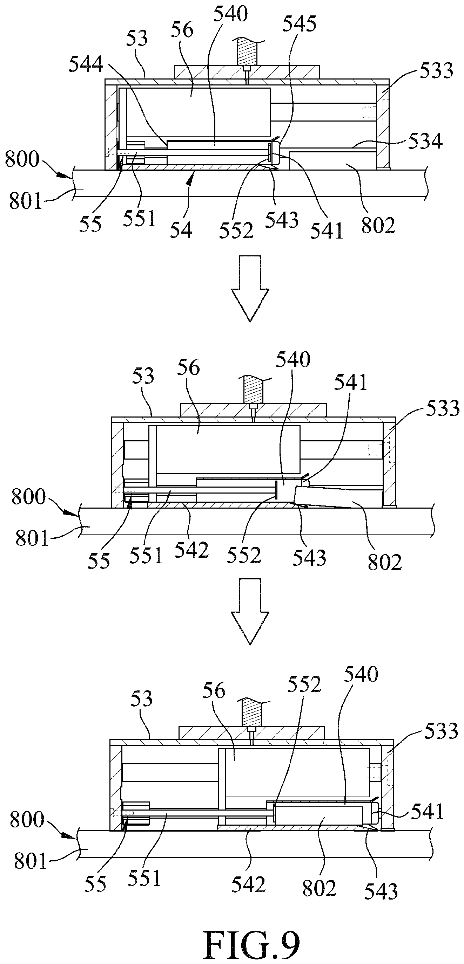

With reference to FIGS. 1, 5 and 9, subsequently, the control device controls, according to information on the dimension of the solar cell module, the two-axis movement regulating module 51 to move the seat regulating module 52 horizontally in two axial directions (that is in both the front-rear direction and the left-right direction) so as to move the abutting plate 533 and the cutting blade 542 above two opposite sides of the junction box 802 of the solar cell module 800, and to permit the abutting plate 533 to be rearward of the rear side of the junction box 802.

Next, the seat regulating module 52 is operated to drive a downward movement of the aligning and holding seat module 53 and the removing seat 54 to permit abutment of the abutting plate 533 and the cutting blade 542 against the back plate of the solar panel unit 801 of the solar cell module 800, and place respectively the abutting plate 533 and the cutting blade 542 at the front and rear sides of the junction box 802. Specifically, through the two-axis movement regulating module 51 driving the slight movement of the seat regulating module 52, the abutting plate 533 is further moved forward to firmly abut against the rear side of the junction box 802.

Then, the removing driving module 56 is controlled and actuated to move the removing seat 54 rearwardly along the back plate of the solar panel unit 801 toward the abutting plate 533. The cutting edge 543 is moved into the juncture between the junction box 802 and the back plate of the solar panel unit 801 to cut the adhesive therebetween and gradually remove the junction box 802 from the solar panel unit 801. Meanwhile, the thrust member 55 is moved forwardly relative to the removing seat 54 and is gradually retreated into the receiving space 540 so as to expose the opening 541.

During the removal of the junction box 802 by the cutting blade 542, the removing seat 54 is moved rearwardly relative to the junction box 802, and, through the guiding end portions 545 of the constrain plates 544, the junction box 802 is guided and enters the receiving space 540 and is constrained among the constrain plates 544 and the upper plate 547. When the cutting edge 543 is moved at a front side of the abutting plate 533, the removing seat 54 is moved to the cutting position, where the junction box 802 is completely detached from the solar panel unit 801 and received in the receiving space 540 of the removing seat 54.

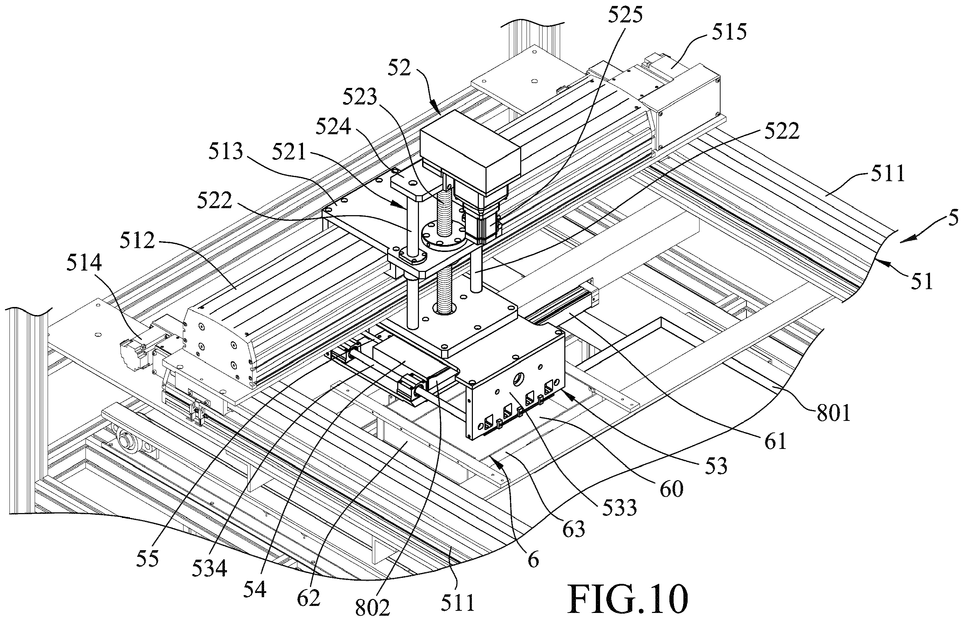

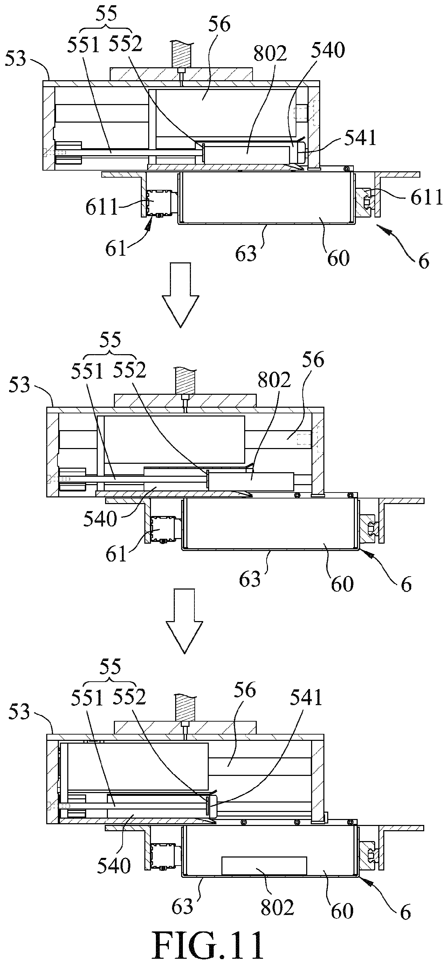

With reference to FIGS. 1, 10 and 11, subsequently, the seat regulating module 52 is operated to drive an upward movement of the aligning and holding seat module 53 and the removing seat 54 with the removed junction box 802 to a position higher than the temporary storage mechanism 6. Then, the two-axis movement regulating module 51 is operated to move the removing seat 54 through the seat regulating module 52 above the storage space 60, and the removing seat 54 is moved relative to the aligning and holding seat module 53 to the returned position. At this stage, the thrust member 55 is moved rearwardly relative to the removing seat 54 to permit the thrust member 55 to thrust the removed junction box 802 outwardly of the opening 541. Finally the removed junction box 802 moved outwardly of the opening 541 is dropped into the storage space 60 and on the movable bottom plate 63.

Another junction box 802 on the solar cell module 800 can be removed by performing the operational process described above, and is stored in the storage space 60.

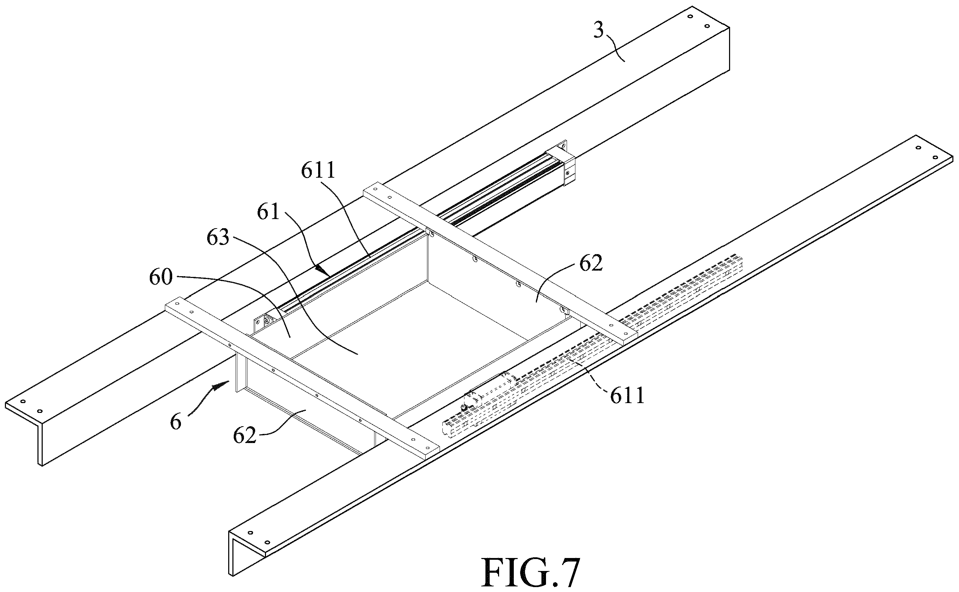

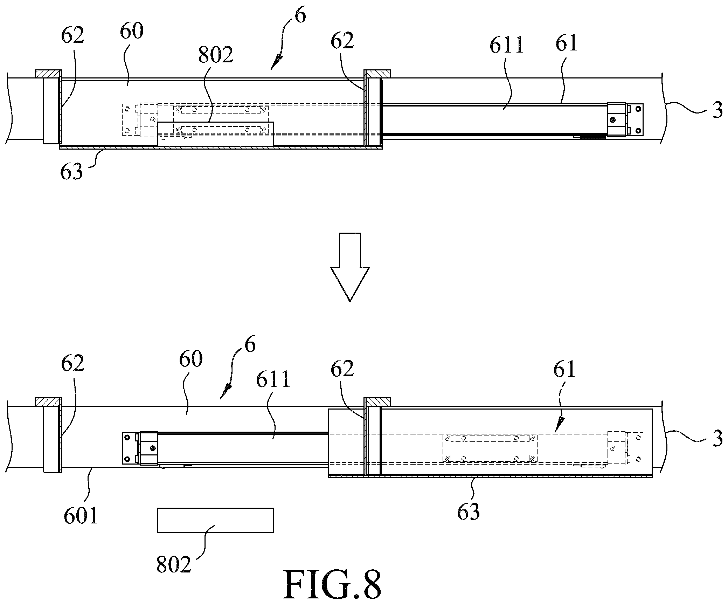

With reference to FIGS. 7 and 8, thereafter, the rail transmitting module 61 of the temporary storage mechanism 6 is operated to move the movable bottom plate 63 from the carrying position to the discharging position to form the discharging port 601 of the storage space 60 so as to permit a downward discharge of the junction box 802. Specifically, a container (not shown) is placed below the storage space 60 for receiving and collecting the junction box 802. Then, the rail transmitting module 61 is operated to move the movable bottom plate 63 back to the carrying position.

As illustrated, with the seat regulating module 52, the aligning and holding seat module 53, the removing seat 54 and the removing driving module 56 of the removing mechanism 5, an automatic removing process for removing the junction box 802 of the solar cell module 800 can be performed. Also, the removing seat 54 is moved and cuts the junction box 802 along the back plate of the solar panel unit 801 to avoid damage to the solar panel unit 801 so as to prevent damage to the glass cover of the solar panel unit 801.

Moreover, through the temporary storage mechanism 6 for temporarily storing the removed junction box 802, a plurality of junction boxes 802 on the solar cell module 800 can be conveniently removed and received in the storage space 60.

## Claims

1. A removing device for removing a junction box (802) from a solar cell module (800), the solar cell module (800) including a solar panel unit (801) and at least one junction box (802) which is attached to a back plate of the solar panel unit (801), **characterized by**:
a frame mechanism (3);
a carriage mechanism (4) mounted on said frame mechanism (3) for carrying the solar cell module (800); and
a removing mechanism (5) mounted on said frame mechanism (3), said removing mechanism (5) including a seat regulating module (52) which is spaced apart from said carriage mechanism (4), an aligning and holding seat module (53) which is connected with and moved by said seat regulating module (52) toward the back plate of the solar panel unit (801), a removing seat (54) which is connected and moved with said aligning and holding seat module (53) to abut against the back plate of the solar panel unit (801), and a removing driving module (56) which is coupled with said removing seat (54) and which drives movement of said removing seat (54) toward the junction box (802) along the back plate of the solar panel unit (801), said removing seat (54) having a cutting blade (542) which is driven by said removing driving module (56) to move along the back plate of the solar panel unit (801) into a juncture between the junction box (802) and the back plate of the solar panel unit (801) so as to remove the junction box (802) from the solar panel unit (801).

2. The removing device of claim 1, wherein said aligning and holding seat module (53) has an abutting plate (533) which is spaced apart from said cutting blade (542), said seat regulating module (52) being operable to drive movement of said aligning and holding seat module (53) to place respectively said abutting plate (533) and said cutting blade (542) at two opposite sides of the junction box (802), said abutting plate (533) abutting against the junction box (802) when said cutting blade (542) is moved into the juncture between the junction box and the back plate of the solar panel unit.

3. The removing device of claim 2, wherein said carriage mechanism (4) is disposed to support and carry the solar cell module (800) horizontally, said seat regulating module (52) being disposed to drive the movement of said aligning and holding seat module (53) in an up-down direction, said removing seat (54) being mounted on and horizontally movable relative to said aligning and holding seat module (53), and further having two constraint plates (544) which are horizontally spaced apart from each other and disposed on an upper side of said cutting blade (542) away from the solar panel unit (801) so as to constrain the removed junction box (802) therebetween.

4. The removing device of claim 3, wherein said removing seat (54) further has an upper plate (547) which straddles said two constraint plates (544) and which is spaced apart from said cutting blade (542) such that said upper plate (547), said constraint plates (544) and said cutting blade (542) cooperatively define a receiving space (540) thereamong, said receiving space (540) having an opening (541) which faces the junction box (802) for entering of the junction box (802) into said receiving space (540), said cutting blade (542) having a cutting edge (543) which projects from said opening (541).

5. The removing device of claim 4, wherein said constraint plates (544) respectively have guiding end portions (545) which are deflected away from each other proximate to said opening (541) for facilitating entering of the junction box (802).

6. The removing device of claim 4, wherein said aligning and holding seat module (53) further has a side plate (532) which is spaced apart from said abutting plate (533), and a horizontal movement guideway unit (534) which extends horizontally and interconnects said side plate (532) and said abutting plate (533), said removing seat (54) being mounted on said horizontal movement guideway unit (534) and being driven by said removing driving module (56) to move along said horizontal movement guideway unit (534).

7. The removing device of claim 6, wherein said removing mechanism (5) further includes a thrust member (55) which is mounted on said side plate (532) and which extends toward said abutting plate (533) into said receiving space (540), said removing seat (54) being driven by said removing driving module (56) to move between a cutting position and a returned position, wherein, when moved toward the cutting position, said removing seat (54) is moved toward said abutting plate (533) to have said cutting blade (542) remove the junction box (802) and receive the junction box (802) in said receiving space (540), and said opening (541) is moved away from said thrust member (55), and, when moved toward the returned position, said removing seat (54) is moved away from said abutting plate (533) to have said opening (541) be moved toward said thrust member (55) and to permit said thrust member (55) to thrust the removed junction box (802) outwardly of said opening (541).

8. The removing device of claim 7, further comprising a temporary storage mechanism (6) which is mounted on said frame mechanism (3), said temporary storage mechanism (6) including a rail transmitting module (61) which is mounted on said frame mechanism (3) and which extends horizontally, two wall plates (62) which are mounted on said frame mechanism (3) and spaced apart from each other, and a movable bottom plate (63) which is movably mounted on said slide rail module (61) and which is transmitted by and moved along said rail transmitting module (61) relative to said wall plates (62) between a carrying position, where said movable bottom plate (63) interconnects said wall plates (62) to cooperatively define a storage space (60) with an upper opening for receiving the junction box (802) from said receiving space (540), and a discharging position, where said movable bottom plate (63) is disengaged from at least one of said wall plates (62) to form a discharging port (601) of said storage space (60) so as to permit a downward discharge of the junction box (802).

9. The removing device of claim 8, wherein said removing mechanism (5) further includes a two-axis movement regulating module (51) mounted on said frame mechanism (3), said seat regulating module (52) being mounted on and driven by said two-axis movement regulating module (51) to be moved horizontally in two axial directions.

10. The removing device of claim 1, wherein said carriage mechanism (4) includes a carriage and transport module (41) for carrying and transporting rearwardly the solar cell module (800) to an operating space in said frame mechanism (3), and at least one laterally aligning module (43), said laterally aligning module (43) including a guide rail unit (431) which extends in a left-right direction and is mounted on said frame mechanism (3), two laterally aligning members (432) which are movably mounted on said guide rail unit (431) and spaced apart from each other in the left-right direction, a synchronizing transmitting unit (434) which is coupled with said laterally aligning members (432) to synchronize movement of said laterally aligning members (432), and a laterally aligning driver (433) which is coupled with said synchronizing transmitting unit (434) such that said laterally aligning members (432) make a synchronous movement along said guide rail unit (431) in opposite directions.

11. The removing device of claim 10, wherein said synchronizing transmitting unit (434) includes a rotary seat (435) which is rotatably mounted on said frame mechanism (3) and which is coupled with said laterally aligning driver (433) to be rotatable about a vertical axis, and two linkages (436), each of which interconnects said rotary seat (435) and a respective one of said laterally aligning members (432) such that rotation of said rotary seat (435) makes the synchronous movement of said laterally aligning members (432).
